# EUROPÄISCHE PATENTSCHRIFT

(11) **EP 2 792 626 B1**
(45) Veröffentlichungstag und Bekanntmachung des Hinweises auf die Patenterteilung: **27.07.2016**
(21) Anmeldenummer: 14163232.3
(22) Anmeldetag: 02.04.2014
(51) Int. Cl.: B65G 47/71

(54) **Gruppierverfahren und -vorrichtung**
Grouping method and device
Procédé et dispositif de regroupement

(30) Priorität: 19.04.2013 DE 102013207091
(43) Veröffentlichungstag der Anmeldung: 22.10.2014
(73) Patentinhaber: Krones Aktiengesellschaft, 93073 Neutraubling (DE)
(72) Erfinder: Elsperger, Stefan, 93073 Neutraubling (DE); Unterseher, Josef, 93073 Neutraubling (DE); Hartl, Michael, 93073 Neutraubling (DE); Kieslinger, Manfred, 93073 Neutraubling (DE)
(74) Vertreter: Benninger, Johannes

(56) Entgegenhaltungen:
- EP-A1- 1 932 783
- EP-A2- 2 246 277
- US-A- 3 838 763

## Beschreibung

Die vorliegende Erfindung betrifft ein Verfahren zum Gruppieren von Artikeln gemäß den Merkmalen des Anspruchs 1 sowie eine Vorrichtung zum Gruppieren von Artikeln gemäß den Merkmalen des Anspruchs 7.

Zum Gruppieren von Behältern, Gebinden oder anderen Packgütern werden oftmals Greifersysteme verwendet, die in mehreren Achsen beweglich sind. Zu diesen Handhabungsstationen mit derartigen Greifersystemen werden die Behälter, Gebinde oder Packgüter mit einer horizontalen Fördergeschwindigkeit in einer Reihe oder in mehreren parallelen Reihen in die Station gefördert. Durch einen Klemmgreifer oder eine andere geeignete Handhabungseinrichtung wird eine bestimmte Anzahl an Gebinden oder Paketen aus dem Zulauf genommen und durch Anheben und/oder Verschieben in eine neue Position gebracht und/oder auf ein Abförderband gestellt, das mit einer anderen geschwindigkeit läuft. Die Abfördergeschwindigkeit ist normalerweise geringer als die Zufördergeschwindigkeit, da die Packgüter sich auf einen breiteren Raum verteilen oder ggf. auch in mehrere Reihen aufgeteilt werden. Nach dem Abstellen des Gebindes oder Paketes wird der Greifer über die abgestellten Pakete oder Gebinde gehoben und bewegt sich wieder zum Zulauf zurück, um dort weitere Pakete oder Gebinde zu bewegen.

Bei diesen bekannten Handhabungsstationen mit Greifersystemen müssen diese nach dem Abstellen eines verschobenen und/oder gedrehten Paketes oder Gebindes zunächst in einem sog. z-Hub angehoben werden, bevor ein Rückhub in horizontaler Richtung (y-Richtung) erfolgen kann, da ansonsten eine Kollision mit bereits bewegten Paketen oder Gebinden drohen würde. Durch diese zwingend erforderliche Hubbewegung in z-Achse erhöht sich normalerweise die Taktzeit für die Bewegung, Gruppierung oder Palettierung der Pakete oder Gebinde. Da normalerweise mindestens ein Antriebsmotor für die z-Achse auf dem Achssystem mitgeführt werden muss, sind die zu bewegenden Massen relativ hoch.

Eine Vorrichtung zum gruppenweisen Verteilen von Behältern ist in der DE 20 2007 013 933 U1 offenbart. Dort werden kontinuierlich beförderte Behälter mittels einseitig angreifender Schieberleisten gegenüber einer Förderrichtung seitlich verschoben, insbesondere zur gruppenweisen Aufteilung einer ununterbrochenen Behälterreihe in mehrere Abförderstrecken, die durch gassenförmig begrenzte Förderstrecken gebildet sein können. Der eingesetzte Schieber ist parallel zur Förderrichtung angeordnet und kann zum Verteilen im Zwischenförderabschnitt wahlweise und ausschließlich einseitig an der einen oder der anderen Seite einer Behältergruppe quer zur Förderrichtung in Anlage gebracht werden.

Eine ähnliche Schubleistenkonfiguration geht aus der US 6 772 872 B2 hervor. Auch dort kann eine einzelne horizontale Schubleisten oder ein Schubleistenpaar eine horizontal beförderte Artikelreihe verschieben und quer zur Förderrichtung auslenken, um damit eine Aufteilung eines ununterbrochenen Artikelstroms in mehrere parallele Fördergassen zu ermöglichen. Die Schubleisten können wahlweise schräg verschoben werden, so dass eine Umlenkung des Artikelstroms in spitzem Winkel zur ursprünglichen Förderrichtung erfolgen kann.

Die EP 1 932 783 A1 offenbart weiterhin eine Manipulatoreinheit zur Gruppierung von Behältern und zu deren Verschiebung innerhalb eines Förderabschnittes einer Horizontalfördereinrichtung. Die Manipulatoreinheit umfasst horizontal verschiebbare Schubleisten, die seitlich an Behältergebinde angreifen und diese in gewünschter Weise quer zu ihrer Hauptbewegungs- und Förderrichtung auslenken.

In der EP 2 246 277 A2 ist eine gattungsgemäße Vorrichtung zum Zusammenführen von Gebinden und/oder Gebindegruppen offenbart, in welchem verschiedenartige Gebinde über wenigstens zwei Zufördereinrichtungen einem Sortierförderer zugeführt werden, in welchem sie mittels Greifern in eine neue, definierte Anordnung und/oder Reihenfolge gebracht bzw. gruppiert werden können und den Sortierförderer schließlich über eine Abfördereinrichtung wiederverlassen. In diesem Sortierförderer kann nicht nur die Reihenfolge der Gebinde neu angeordnet werden, es ist auch eine Drehung der Gebinde möglich.

Ein vorrangiges Ziel der vorliegenden Erfindung besteht darin, ein schnelles und effizientes Gruppierverfahren sowie eine entsprechende Gruppiervorrichtung zur Verfügung zu stellen, die eine einfache Steuerung und sehr schnelle Bewegungsabläufe zur Gruppierung von Artikeln ermöglicht.

Dieses Ziel der Erfindung wird mit den Gegenständen der unabhängigen Ansprüche erreicht. Merkmale vorteilhafter Weiterbildungen der Erfindung ergeben sich aus den abhängigen Ansprüchen. So schlägt die Erfindung zur Erreichung des genannten Ziels ein Verfahren zum Gruppieren, Verschieben und/oder zur Umsortierung von Artikeln vor, welche in wenigstens einer regelmäßigen Reihe hintereinander in horizontaler Richtung befördert und gruppenweise mittels mehrerer zusammenwirkender Klemmleisten erfasst und in seitlicher Richtung gegenüber der ursprünglichen Förderrichtung verschoben werden, so dass sie parallel zu dieser ursprünglichen Richtung weiterbefördert werden können. Die Erfassung und Verschiebung einzelner Artikelgruppen aus dem Förderstrom erfolgt mittels wenigstens dreier zusammenwirkender Klemmleisten, die jeweils in wechselnden Paaren zusammenwirken und die Artikel erfassen und verschieben können. Diese Erfassung, Manipulation und seitliche Verschiebung der Artikelgruppen erfolgt mittels beidseitig die Artikel kontaktierender Klemmleisten, von denen jeweils gleichzeitig zwei in paarweiser Zusammenwirkung an beiden Längsseiten der regelmäßigen Reihe der Artikel angreifen, so dass der zunächst ununterbrochene Artikelstrom in einzelne Artikelgruppen aufgeteilt und seitlich in nachgeordnete Fördergassen verschoben und eingruppiert wird. Bei diesem Verfahren wirkt eine mittlere Klemmleiste bei jedem Verschiebevorgang einer Artikelgruppe jeweils mit einer der äußeren Klemmleisten zusammen, so dass sie mit dieser ein Klemmleistenpaar zur temporären seitlichen Fixierung der kontaktierten Artikelgruppe und zu deren seitlicher Verschiebung nach links oder rechts in die jeweilige Fördergasse bildet. Das Klemmleistenpaar umfasst grundsätzlich immer die mittlere Klemmleiste, während abwechselnd oder je nach gewünschter Verschieberichtung die äußere linke oder die äußere rechte Klemmleiste der insgesamt drei beweglichen Klemmleisten aktiviert ist.

Das Verfahren sieht die seitliche Verschiebung von Gruppen definierter Artikelanzahl vor, wobei aufeinander folgende Artikelgruppen aus der Reihe in Förderrichtung normalerweise jeweils abwechselnd nach links oder rechts verschoben werden. Um dies zu erreichen, wirkt eine mittlere Klemmleiste bei jedem Verschiebevorgang jeweils mit einer der äußeren Klemmleisten zusammen und bildet mit dieser ein Klemmleistenpaar zur seitlichen Fixierung der zu gruppierenden Artikel und zu deren Verschiebung nach links oder rechts. Bei einer Zusammenwirkung mit der äußeren linken Klemmleist greift die mittlere Klemmleiste von rechts an der zu verschiebenden Artikelgruppe an, während die mittlere Klemmleiste bei Zusammenwirkung mit der äußeren rechten Klemmleiste von links an der zu verschiebenden Artikelgruppe angreift.

Bei dem erfindungsgemäßen Gruppierverfahren pendeln die an die zu gruppierenden Artikel angreifenden Klemmleisten jeweils in kombinierter bzw. überlagerter Bewegung senkrecht und/oder schräg zur Förderrichtung hin und her, wodurch die Gruppen von Artikeln abwechselnd nach links und nach rechts, bezogen auf die ursprüngliche Förderrichtung, verschoben und in wenigstens zwei parallele Fördergassen verteilt werden. Besonders vorteilhaft ist dabei, dass sich die Klemmleisten jeweils innerhalb des Gruppierbereichs in einer horizontalen Ebene bewegen können. D.h., der Bewegungsverlauf kann innerhalb einer horizontalen Ebene stattfinden, ohne dass ein zeitraubender z-Hub erforderlich wäre.

Das erfindungsgemäße Gruppierverfahren ermöglicht eine Aufteilung einer in regelmäßiger Reihe zugeführten Artikelfolge in Gruppen in wenigstens zwei parallele Gassen, was durch die Bewegungen der Klemmleisten erfolgt, welche die Artikelgruppen von einer zugeführten regelmäßigen Reihe in definierter Weise auf wenigstens zwei parallele Gassen aufteilen, wo sie in Gruppen oder in ununterbrochenen Reihen weitertransportiert werden. Die Länge der Klemmleisten definiert dabei die maximale Größe der jeweils erfassten Artikelgruppe. Die wenigstens zwei parallelen Fördergassen, in welche die Artikel aufgeteilt werden, sind zu beiden Seiten der durch eine ein- oder mehrbahnige Zufördereinrichtung mit einer ursprünglichen Fördergeschwindigkeit und Förderrichtung in den Gruppierbereich transportierten Artikelreihe angeordnet, von wo aus sie durch die Einwirkung der in beschriebener Weise beweglichen Klemmleisten in geordnete Gruppen oder in ununterbrochenen Reihen innerhalb der parallelen Fördergassen weitertransportiert werden, welche sich an den Gruppierbereich anschließen.

Wahlweise kann das Gruppieren und Aufteilen einer Reihe von hintereinander in Förderrichtung beförderten Artikeln mehrfach in hintereinander gestaffelter Anordnung mittels mehrerer hintereinander angeordneter Gruppiereinheiten zur Verteilung der Artikel auf zwei, drei, vier oder mehr paralleler Gassen erfolgen. In diesem Zusammenhang sei darauf hingewiesen, dass in der Regel nur geradzahlige Gassenanordnungen realisiert werden, wobei sich mit entsprechenden Modifikationen auch ungeradzahlige Gassenanordnungen realisieren lassen.

Das beschriebene Verfahren lässt sich mehrfach staffeln, da grundsätzlich jede beförderte Artikelreihe durch eine entsprechend angreifende Klemmleistenanordnung in zwei parallele Artikelreihen aufgeteilt werden kann. So sind bspw. Konfigurationen denkbar, bei denen in einer ersten Gruppiereinheit eine Aufteilung eines mittigen ununterbrochenen Artikelstroms in zwei äußere Fördergassen erfolgt, während in einer nachgeordneten Gruppiereinheit eine weitere Aufteilung zuvor nicht erfasster und noch immer mittig transportierter Artikelgruppen in zwei weitere Fördergassen erfolgen kann, die sich vorzugsweise jeweils neben den äußersten Fördergassen befinden, so dass mittels zwei hintereinander angeordneter Gruppiereinheiten eine Aufteilung eines einzigen, relativ schnell laufenden Artikelstroms in vier parallele, jeweils deutlich langsamer laufende Förderströme bzw. Fördergassen erfolgen kann. Auch eine entsprechende Aufteilung in sechs oder mehr parallel angeordnete Fördergassen durch eine entsprechende Anzahl hintereinander angeordneter Gruppiereinheiten ist problemlos möglich, sofern der hierfür benötigte Platz zur Verfügung steht. Grundsätzlich gilt, dass eine zuführende Gasse mit einem der beschriebenen Systeme auf mehr als zwei abführende Gassen aufgeteilt werden kann.

Die vorliegende Erfindung umfasst zur Erreichung des oben genannten Ziels weiterhin eine Vorrichtung zum Gruppieren von Artikeln, die eine Zufördereinrichtung zum horizontalen Transport wenigstens einer Reihe regelmäßig hintereinander beförderter Artikel zu einer Gruppiereinrichtung aufweist, die ihrerseits wenigstens drei, jeweils in wechselnden Paaren zusammenwirkende Klemmleisten zur seitlichen Kontaktierung der regelmäßigen Reihe von Artikeln umfasst. Mittels dieser in wechselnden Paaren zusammenwirkender Klemmleisten können einzelne Artikelgruppen der regelmäßigen Reihe seitlich zu wenigstens einer weiteren Fördergasse verschoben werden. Dies kann dadurch erreicht werden, dass eine mittlere Klemmleiste bei jedem Verschiebevorgang einer Artikelgruppe jeweils mit einer der äußeren Klemmleisten zusammenwirkt und mit dieser ein Klemmleistenpaar zur seitlichen Fixierung der kontaktierten Artikelgruppe und zu deren seitlicher Verschiebung nach links oder rechts bildet. Auf diese Weise können aufeinander folgende Artikelgruppen aus der Reihe in Förderrichtung jeweils abwechselnd nach links oder rechts verschoben werden, indem die mittlere Klemmleiste bei jedem Verschiebevorgang jeweils mit einer der äußeren Klemmleisten zusammenwirkt und mit diesem ein Klemmleistenpaar zur seitlichen Fixierung der zu gruppierenden Artikel und zu deren Verschiebung nach links oder rechts bildet. Die mittlere Klemmleiste greift bei einer Zusammenwirkung mit der äußeren linken Klemmleiste von rechts an der zu verschiebenden Artikelgruppe an und verschiebt diese gegenüber der ursprünglichen Förderrichtung nach links. Danach kann die mittlere Klemmleiste bei Zusammenwirkung mit der äußeren rechten Klemmleiste von links an der zu verschiebenden Artikelgruppe angreifen und die Artikelgruppe nach rechts verschieben. Diese Verschiebebewegungen in die eine oder andere Richtung können vorzugsweise abwechselnd nacheinander erfolgen. Grundsätzlich wäre zwar auch eine Verschiebung zweier aufeinander folgender Artikelgruppen in die gleiche Richtung möglich, was allerdings zu einer größeren Lücke in der jeweils nicht beaufschlagten Fördergasse führen würde, was unter Umständen unerwünscht ist. Zudem gilt bei aufeinander folgenden Verschiebungen in dieselbe Richtung, dass zwischen den Verschiebevorgängen entweder eine vertikale Hubbewegung der mittleren Klemmleiste oder ein Rückhub durch die zuvor gebildete Lücke erforderlich wäre, was mit einem gewissen Zusatzaufwand und/oder mit einer Reduzierung der Verarbeitungsgeschwindigkeit einher ginge.

Vorteilhaft ist es dabei, dass die an die zu gruppierenden Artikel angreifenden Klemmleisten jeweils senkrecht und/oder schräg zur Förderrichtung hin und her pendeln, so dass kein aufwändiger z-Hub nach jedem Verschiebevorgang erforderlich ist. Vielmehr bewegen sich die Klemmleisten jeweils innerhalb des Gruppierbereichs in einer horizontalen Ebene. Dies wird u.a. dadurch ermöglicht, dass die wenigstens drei Klemmleisten einer Gruppiereinheit an einer gemeinsamen Aufhängung oberhalb der Transportebene geführt sind.

Somit ermöglicht es die erfindungsgemäße Gruppiervorrichtung, dass die beschriebenen Klemmleisten die Artikelgruppen von einer zugeführten regelmäßigen Reihe in definierter Weise auf wenigstens zwei parallele Gassen aufteilen, wo sie in Gruppen oder in ununterbrochenen Reihen weitertransportiert werden. Wahlweise kann die Gruppierung und Aufteilung einer Reihe von hintereinander in Förderrichtung beförderten Artikeln mehrfach in hintereinander gestaffelter Anordnung mittels mehrerer hintereinander angeordneter Gruppiereinheiten zur Verteilung der Artikel auf zwei, vier oder mehr paralleler Gassen erfolgen. Somit können bspw. mehrere Gruppiereinheiten mit jeweils drei zusammenwirkenden Klemmleisten zur Aufteilung eines Artikelstroms in jeweils zwei parallele Artikelströme in gestaffelter Anordnung hintereinander angeordnet sein. Es sei wiederum darauf hingewiesen, dass die beschriebene Anordnung im Wesentlichen für den Einsatz bei geradzahligen abführenden Gassen vorgesehen ist, dass sich nach entsprechenden Modifikationen jedoch auch ungeradzahlige Gassenanordnungen realisieren lassen.

Besonders vorteilhaft können die Bewegungsverläufe der wenigstens drei Klemmleisten dadurch ermöglicht werden, dass die Klemmleisten der Gruppiereinrichtung an einer gemeinsamen Aufhängung oberhalb einer durch die Zufördereinrichtung definierten Transportebene geführt sind. Hierbei kann bspw. vorgesehen sein, dass die Aufhängung einen parallel zur Förderrichtung der Zufördereinrichtung oszillierenden Schlitten umfasst, an dem die wenigstens drei Klemmleisten quer zur Oszillationsrichtung des Schlittens beweglich gelagert sind. Auf diese Weise können die Bewegungsabläufe der jeweils äußeren Klemmleisten minimiert werden, da sich diese äußeren Klemmleisten nur dann zu bewegen haben, wenn sie aktuell benötigt werden. Die gesamte Anordnung kann besonders vorteilhaft ausgestaltet sein, wenn der oszillierende Schlitten keine eigenen Antriebsmotoren aufweist, sondern lediglich geeignete Lagerungen für Zugmittelantriebe wie bspw. Riemenantriebe, deren Umlenkungen und Antriebsmotoren außerhalb des oszillierend beweglichen Schlittens fest gelagert sein können, so dass der Schlitten selbst sehr leicht gehalten werden kann, was zu geringen bewegten Massen und dadurch zu einem sehr schnell oszillierenden Schlitten führen kann. Durch dessen geringe Gesamtmasse kann er mit wenig Energieeinsatz schnell beschleunigt und abgebremst werden, so dass die gewünschte Gruppierung auch bei relativ schnell befördertem Artikelstrom mit der gewünschten Geschwindigkeit und Präzision erfolgen kann.

Die Gruppiereinheit, die bspw. durch ein sog. Portalsystem mit daran beweglich gelagerter Aufhängung in Form des oben beschriebenen oszillierenden Schlittens und daran quer beweglichen Klemmleisten gebildet sein kann, ist in der Lage, die Artikelgruppen von einer zugeführten regelmäßigen Reihe der Zufördereinrichtung in definierter Weise auf wenigstens zwei parallele Gassen aufzuteilen und/oder zu gruppieren, wo sie in Gruppen oder in ununterbrochenen Reihen weitertransportiert werden, allerdings in der Regel mit reduzierter Fördergeschwindigkeit. Bei Bedarf können die Artikel allerdings auch in einer Weise umgruppiert werden, dass definierte Abstände zwischen den verschobenen Artikelgruppen in den einzelnen Fördergassen gebildet werden. Wie erwähnt, können wahlweise mehrere Gruppiereinheiten in Förderrichtung hintereinander angeordnet werden, die dann zur Aufteilung und/oder Gruppierung der Artikel auf drei, vier oder mehr paralleler Gassen genutzt werden können. So kann vorgesehen sein, dass mehrere Gruppiereinheiten mit jeweils drei zusammenwirkenden Klemmleisten zur Aufteilung wenigstens eines Artikelstroms und/oder zu dessen Gruppierung in jeweils zwei oder mehr parallele Artikelströme in gestaffelter Anordnung hintereinander angeordnet sind.

Das beschriebene System zur Aufteilung eines Artikelstroms in zwei oder mehr parallele Fördergassen umfasst im einfachsten Fall nur einen in horizontaler Richtung (x-Achse) beweglichen mehrteiligen Manipulator. Eine Beweglichkeit der Gruppiereinrichtung in hierzu senkrechten Achsen (z-Achse und y-Achse) kann dagegen entfallen. Die oben beschriebenen Klemmleisten werden dagegen ausschließlich in horizontaler Richtung bewegt, da sie innerhalb der Gruppiereinrichtung in einer in x-Richtung verschiebbaren Aufhängung gelagert sind. Die Gruppiereinrichtung bzw. der Greifer besteht aus drei einzeln ansteuerbaren und bewegbaren Klemmbacken oder Klemmleisten. Zum Gruppieren der Artikel wie bspw. Pakete oder Gebinde werden diese mit der mittleren und einer seitlichen Klemmbacke geklemmt und seitlich nach links oder rechts verschoben. Nachdem die geklemmten Artikel, Pakete oder Gebinde aus dem Zulauf herausgeschoben wurden wird mit der x-Achse eine Abstellposition angefahren wurde, kann auf die Ablaufgeschwindigkeit aufsynchronisiert werden. Nach dem Lösen der Artikelgruppe bzw. der Pakete macht die Greifereinheit einen Rückhub in x-Richtung bis zur nächsten seitlich zu verschiebenden Artikelgruppe. Für eine optimierte Verfahrkurve und damit auch für eine optimierte Taktzeit ist es notwendig, dass der Rückhub so lange ist, dass die Klemmbacke oder Klemmleiste an der abgesetzten Artikelgruppe vorbeifahren kann, ohne mit den Artikeln zu kollidieren. Damit ist sichergestellt, dass die Klemmleiste bei der nächsten Artikelgruppe auf der richtigen Position, dicht neben dem Zulauf steht und die Zeiten für den Klemmvorgang minimiert werden können.

Während des Rückhubs fährt die mittlere Klemmleiste an die Artikelgruppe im Zulauf heran. Die andere aktive (rechte oder linke) Klemmleiste befindet sich bereits direkt neben den Artikeln des Zulaufes. Ist nun die Gruppiereinrichtung auf die Fördergeschwindigkeit des Zulaufs aufsynchronisiert, klemmt die äußere aktive (rechte oder linke) und die mittlere Klemmleiste die Artikelgruppe und verschiebt diese nach rechts oder links, wobei die Artikelgruppe gleichzeitig auf die Fördergeschwindigkeit der entsprechenden Fördergasse aufsynchronisiert wird. Nach dem Rückhub zur nächsten zu greifenden Artikelgruppe beginnt der Zyklus von vorne.

Gemäß einer alternativen Ausführungsvariante könnten die beiden äußeren Klemmleisten wahlweise auch fest moniert sein, während nur die mittlere Klemmleiste über den ganzen Bereich beweglich sein könnte. In diesem Fall ist jedoch eine zusätzliche Beweglichkeit um eine y-Achse erforderlich. Bei einer solchen Ausführung können nur zwei definierte Spuren befüllt werden. Die Position der Spuren wird durch den Abstand der beiden äußeren Klemmleisten definiert. Das bedeutet, dass für jeweils zwei zu beaufschlagende Spuren immer ein Achssystem notwendig ist.

Eine vorteilhafte Reduzierung der Massen und damit eine Erhöhung der Dynamik kann durch einen Aufbau mit verschiebbarem Schlitten und quer auf dem Schlitten beweglichen Klemmleisten erreicht werden. Hierbei werden die Klemmleisten jeweils durch Riemen angesteuert, während ihre Antriebsmotoren orts- oder gestellfest am Maschinenrahmen aufgehängt sein können. Ein weiterer Vorteil bei dieser Konfiguration liegt im Entfall von Energieführungsketten und den damit verbundenen Problemen.

Durch den Entfall einzelner Bewegungsachsen wird das ganze System leichter und damit auch dynamischer. Durch den Entfall unnötiger Achsen ist das System einfacher und auch kostengünstiger realisierbar. Die Bewegung des parallel zur Artikelförderrichtung oszillierenden Schlittens der Klemmleistenaufhängung und der mittleren Klemmleiste können überlagert werden. Wenn der Schlitten seine Position nach einem vorhergehenden Rückhub erreicht hat, kann sofort geklemmt werden. Die Klemmleisten stehen dabei schon in der richtigen Position. Durch die mögliche größere Dynamik und die optimierten Verfahrwege sind kürzere Taktzeiten erreichbar. Auf einen Vertikalhub kann völlig verzichtet werden, wodurch die Taktzeit verkürzt werden kann. Die Artikel oder Behälter müssen nicht angehoben werden, sondern werden nur verschoben. Damit verringert sich die Störanfälligkeit, weil die Artikelgruppen nicht aus der Klemmung fallen können. Durch den Entfall von y-Achse und z-Achse ist eine Ansteuerung von außen ohne Energieführungsketten o. dgl. möglich.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt zusammenwirkende Komponenten einer erfindungsgemäßen Vorrichtung zum Gruppieren von Artikeln.
Fig. 2a bis 2i zeigen eine schematische Abfolge von hintereinander ablaufenden Verschiebevorgängen von Artikelgruppen.
Fig. 3a bis 3d zeigen drei Gruppiereinheiten, die in hintereinander in Förderrichtung angeordnet sind.
Fig. 4 zeigt eine schematische Darstellung einer Ausführungsvariante eines Schlittens.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

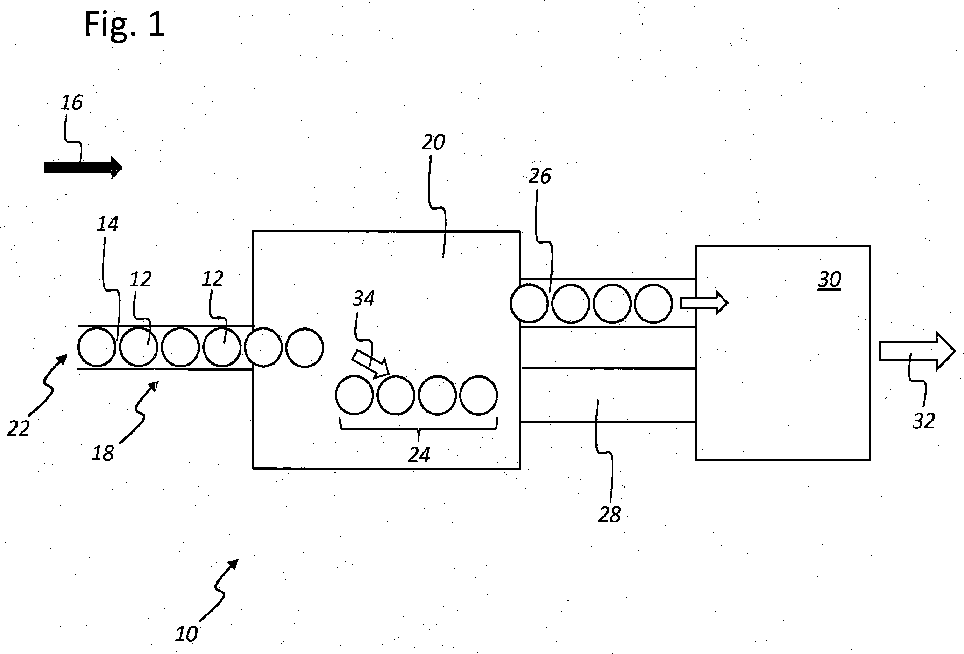

Die schematische Darstellung der Fig. 1 zeigt zusammenwirkende Komponenten einer erfindungsgemäßen Vorrichtung 10 zum Gruppieren von Artikeln 12 wie Behältern, Gebinden, Stückgütern o. dgl., die mittels einer links erkennbaren Zufördereinrichtung 14 in horizontaler Transportrichtung 16 in einer geschlossenen Reihe 18 regelmäßig hintereinander zu einer Gruppiereinrichtung 20 befördert werden. Innerhalb dieser Gruppiereinrichtung 20 wird der durch die Zufördereinrichtung 14 definierte durchgängige Förderstrom 22 der Artikel 12 in mehrere aufeinander folgende Gruppen 24 jeweils definierter Artikelzahl aufgeteilt und in zwei der Gruppiereinrichtung 20 in Förderrichtung 16 nachgeordnete parallele Fördergassen 26 (oben) und 28 (unten) verschoben. Den parallelen Fördergassen 26 und 28, in denen die Gruppen 24 definierter Artikelanzahl weiterbefördert werden, können bspw. in eine hier nicht näher spezifizierte Gruppier-, Palettier- und/oder andere Handhabungs- oder Verpackungseinrichtung münden, wo die Artikelgruppen 24 in gewünschter Weise behandelt werden können, so z.B. zu ihrer Palettierung, Verpackung oder zu ihrer sonstigen Weiterbehandlung, zum Weitertransport etc. Die Weiterbehandlung der Artikelgruppen 24 wird lediglich durch den Block 30 und den nachgeordneten Pfeil 32 in Abförderrichtung angedeutet.

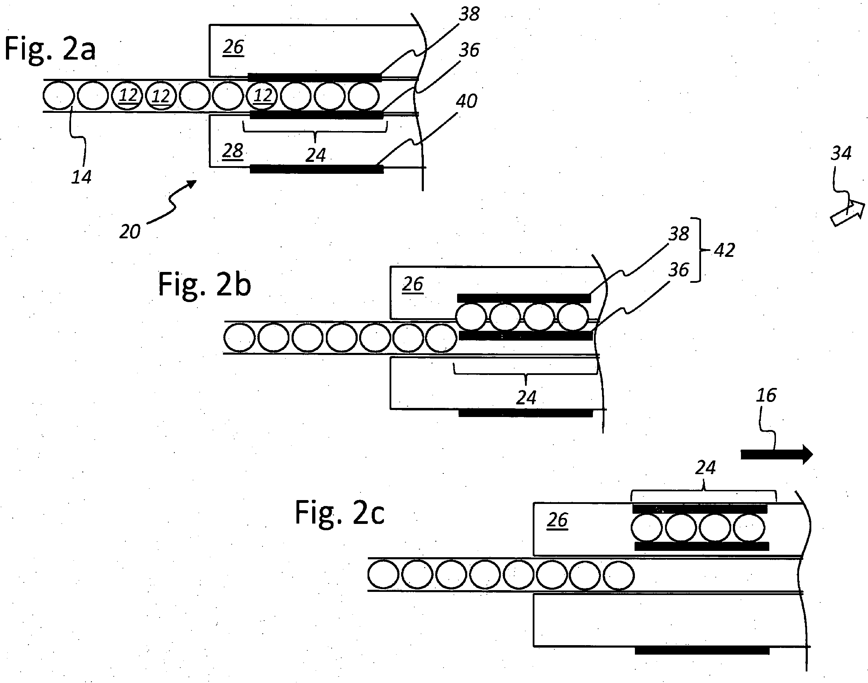

Was in der schematischen Darstellung der Fig. 1 lediglich durch den im Bereich der Gruppiereinrichtung 20 schräg nach unten bzw. gegenüber der Förderrichtung 16 schräg nach rechts gerichteten Pfeil 34 erkennbar ist, ist die Verschiebung einer einzelnen Artikelgruppe 24 mit mehreren in Reihe hintereinander angeordneten Artikeln 12 in Richtung der rechten Fördergasse 28, die für den Weitertransport der nach rechts verschobenen Artikelgruppe 24 zur Handhabungs- und/oder Verpackungseinrichtung 30 in Abförderrichtung 32 sorgt, wird anhand der folgenden Darstellungen der Figuren 2a bis 2i im Detail verdeutlicht.

So sind innerhalb der Gruppiereinrichtung 20, an welche die Zufördereinrichtung 14 nicht nur mündet, sondern in die Gruppiereinrichtung 20 hineinreicht, drei bewegliche Klemmleisten 36, 38 und 40 angeordnet, die jeweils in wechselnden Paaren zusammenwirken können, wodurch die zu verschiebenden Artikelgruppen 24, die in die Gruppiereinrichtung 20 hineingefördert wurden, jeweils zu beiden Längsseiten kontaktiert und einzeln in seitlicher Richtung zu jeweils einer der beiden Fördergassen 26 und 28 verschoben werden. Die mittlere Klemmleiste 36 wirkt bei jedem dieser einzelnen Verschiebevorgänge einer Artikelgruppe 24 jeweils mit einer der äußeren Klemmleisten 38 bzw. 40 zusammen und bildet mit dieser ein Klemmleistenpaar 42 bzw. 44 zur seitlichen Fixierung der jeweils kontaktierten Artikelgruppe 24 und dient der seitlichen Verschiebung der kontaktierten und seitlich geklemmten Artikelgruppe 24 nach links in die linke Fördergasse 26 oder nach rechts in die rechte Fördergasse 28.

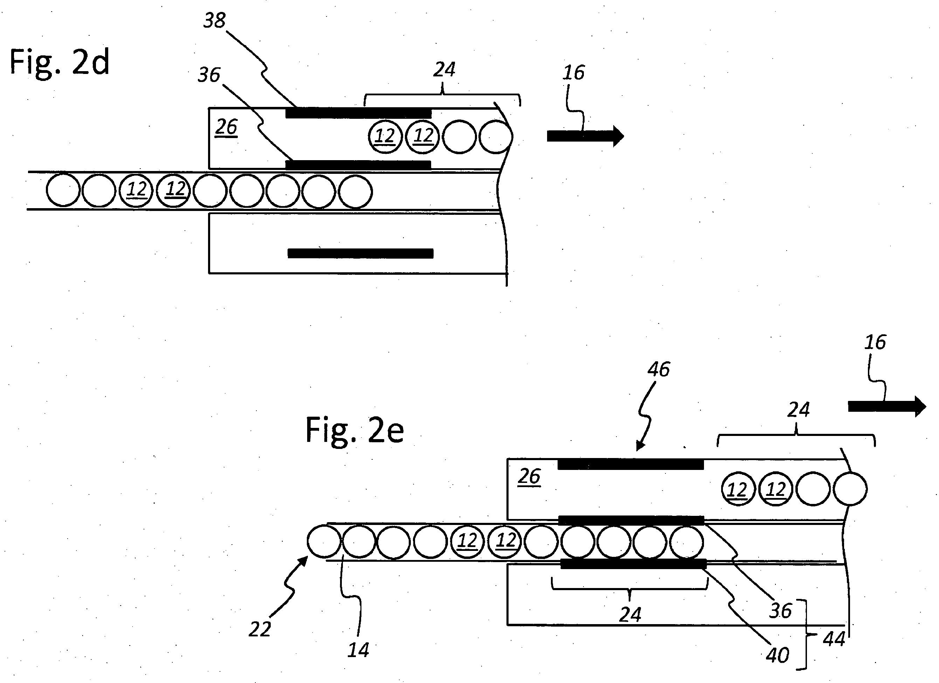

Die Fig. 2a verdeutlicht den Einlauf einer zu verschiebenden Artikelgruppe 24 mit insgesamt vier in Reihe hintereinander beförderten Artikeln 12, die mittels der Zufördereinrichtung 14 in den Bereich der Gruppiereinrichtung 20 befördert werden. Da diese Artikelgruppe 24 gemäß Fig. 2b bis Fig. 2c nach links verschoben werden sollen, so dass sie in der linken Fördergasse 26 weiterbefördert werden können, greift hierbei die mittlere Klemmleiste 36 an der rechten Längsseite der Artikelgruppe 24, während die linke Klemmleiste 38 von links zugestellt wird und somit an der linken Längsseite der Artikelgruppe 24 angreift. Die beiden Klemmleisten 36 und 38 befinden sich auf einer Höhe, sind parallel zueinander angeordnet und bilden gemeinsam das erste bzw. linke Klemmleistenpaar 42, das die Artikelgruppe 24 gemäß Fig. 2b nach links verschiebt. Sobald das erste Klemmleistenpaar 42 und die damit geklemmte Artikelgruppe 24 in Förderrichtung 16 mit der linken Fördergasse 26 fluchtet (Fig. 2c), wird die Zustellung der Klemmleisten 36 und 38 gelöst (Fig. 2d), wodurch die Artikel 12 der Artikelgruppe 24 freigegeben und in Förderrichtung 16 in die linke Fördergasse 26 befördert werden (Fig. 2e), was normalerweise mit geringerer Fördergeschwindigkeit erfolgt als der Förderstrom 22 im Bereich der Zufördereinrichtung 14.

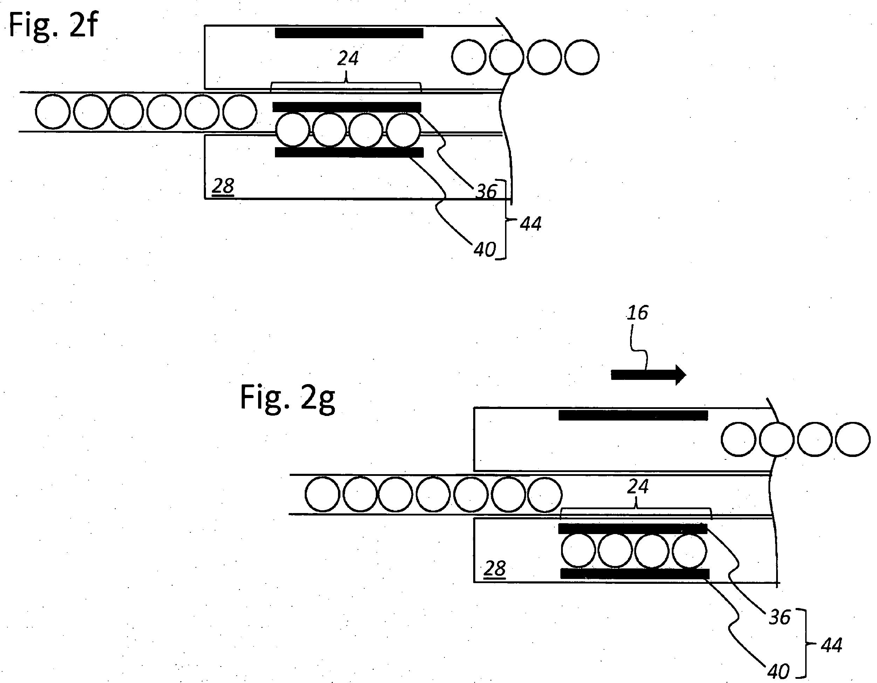

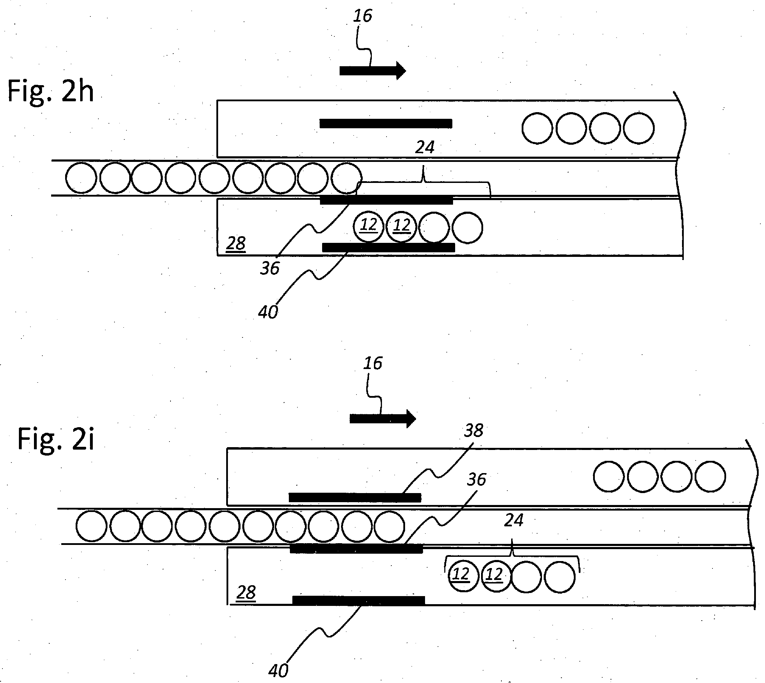

Wie es die Fig. 2e verdeutlicht, kann unmittelbar nach Freigabe der zuvor verschobenen Artikelgruppe 24, die in der linken Fördergasse 26 weitertransportiert wird, die rechte Klemmleiste 40 nach links an die nächste folgende Artikelgruppe 24 zugestellt werden und diese an ihrer rechten Längsseite kontaktieren, während gleichzeitig die mittlere Klemmleiste 36 dieselbe Artikelgruppe 24 an der linken Längsseite kontaktiert, wodurch eine Verschiebung nach rechts erfolgen kann, wie dies die Figuren 2f und 2g verdeutlichen. Die mittlere Klemmleiste 36 und die rechte Klemmleiste 40 bilden hierbei das rechte bzw. zweite Klemmleistenpaar 44, das die Artikelgruppe 24 gemäß Fig. 2f nach rechts verschiebt. Sobald das zweite Klemmleistenpaar 44 und die damit geklemmte Artikelgruppe 24 in Förderrichtung 16 mit der rechten Fördergasse 28 fluchtet (Fig. 2g), wird die Zustellung der Klemmleisten 36 und 40 gelöst (Fig. 2h), wodurch die Artikel 12 der Artikelgruppe 24 freigegeben und in Förderrichtung 16 in die rechte Fördergasse 28 befördert werden (Fig. 2i), was normalerweise mit geringerer Fördergeschwindigkeit erfolgt als der Förderstrom 22 im Bereich der Zufördereinrichtung 14.

Die schematischen Figuren 2a bis 2i, die eine typische Abfolge von hintereinander ablaufenden Verschiebevorgängen von Artikelgruppen 24 mit jeweils vier hintereinander angeordneten Artikeln 12 von der mittig angeordneten Zufördereinrichtung 14 auf zwei parallele Fördergassen 26 und 28 verdeutlichen und veranschaulichen, lassen erkennen, dass die mittlere Klemmleiste 36 bei jedem einzelnen dieser Verschiebevorgänge einer Artikelgruppe 24 abwechselnd an einer linken und an einer rechten Längsseite jeweils aufeinander folgender Artikelgruppen angreift und sich dort anlegt, während sie gleichzeitig jeweils mit einer der äußeren Klemmleisten 38 bzw. 40 zusammenwirkt und mit dieser ein Klemmleistenpaar 42 bzw. 44 zur seitlichen Fixierung der jeweils kontaktierten Artikelgruppe 24 bildet. Wenn die mittlere Klemmleiste 36 von rechts an die nach links zu verschiebende Artikelgruppe 24 angreift (Fig. 2a bis Fig. 2d), wirkt sie dabei mit der von links an die Artikelgruppe 24 angreifenden linken Klemmleiste 38 zusammen, wodurch das linke Klemmleistenpaar 42 gebildet wird. Wenn die mittlere Klemmleiste 36 dagegen von links an die nach rechts zu verschiebende Artikelgruppe 24 angreift (Fig. 2e bis Fig. 2i), wirkt sie dabei mit der von rechts an die Artikelgruppe 24 angreifenden rechten Klemmleiste 40 zusammen, wodurch das rechte Klemmleistenpaar 44 gebildet wird.

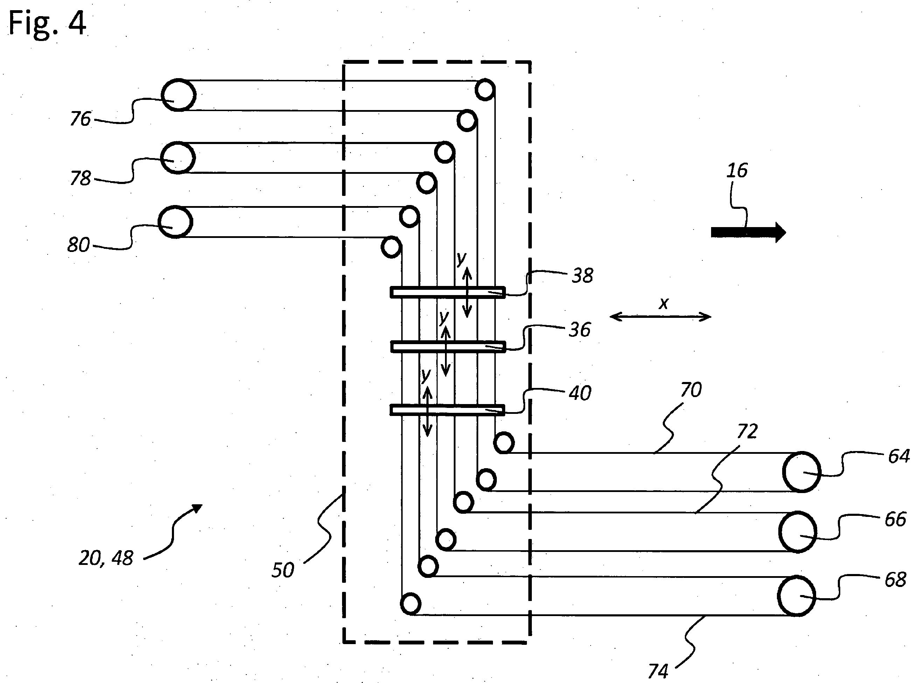

Die Figuren 2a bis 2i lassen zudem erkennen, dass alle drei Klemmleisten 36, 38 und 40 in Förderrichtung 16 jeweils miteinander fluchten und zueinander ausschließlich quer zu ihren Längserstreckungsrichtungen beweglich sind, während sie jedoch als Gruppiermodul oder als Gruppiereinheit 46 innerhalb eines definierten Bewegungsraumes ihrer zugeordneten Gruppiereinrichtung 20 gemeinsam in und gegen die Förderrichtung 16 beweglich angeordnet sein können. Entsprechend der Definitionen der vorliegenden Erfindung umfasst die erwähnte Gruppiereinheit 46 die drei in horizontaler Richtung beweglichen Klemmleisten 36, 38 und 40, die sich bspw. gemäß der in Fig. 4 gezeigten Anordnung zueinander verschieben lassen, wobei eine gemeinsame Aufhängung bzw. Lagerung am Schlitten 50 sinnvoll ist.

Von Vorteil für die gezeigte schnelle Verschiebbarkeit der Artikelgruppen 24 nach links oder rechts innerhalb der Gruppiereinrichtung 20 ist weiterhin die kollisionsvermeidende Führung der drei Klemmleisten 36, 38 und 40, die trotz ihrer schnellen Bewegungen keinerlei Hubbewegungen benötigen, sondern im Wesentlichen innerhalb der Gruppiereinheit 46 annähernd in einer horizontalen Ebene bewegt werden. Entsprechend der Definitionen der vorliegenden Erfindung umfasst die erwähnte Gruppiereinheit 46 die beweglich angeordnete Gruppiereinrichtung 20 mit ihren drei in horizontaler Richtung bzw. in gemeinsamer horizontaler Ebene oberhalb einer Förderebene beweglichen Klemmleisten 36, 38 und 40, wobei die Gruppiereinrichtung 20 als Ganzes innerhalb der Gruppiereinheit 46 in und entgegen der Förderrichtung 16 beweglich ist. Um diese Beweglichkeit zu erreichen, ist vorgesehen, dass die insgesamt drei Klemmleisten 36, 38 und 40 der Gruppiereinrichtung 20 an einer gemeinsamen Aufhängung oberhalb einer durch die Zufördereinrichtung 14 definierten Transportebene geführt sind. Diese Aufhängung kann bspw. einen parallel zur Förderrichtung 16 der Zufördereinrichtung 14 oszillierenden Schlitten umfassen, an dem die wenigstens drei Klemmleisten 36, 38 und 40 quer zur Oszillationsrichtung des Schlittens beweglich gelagert sind.

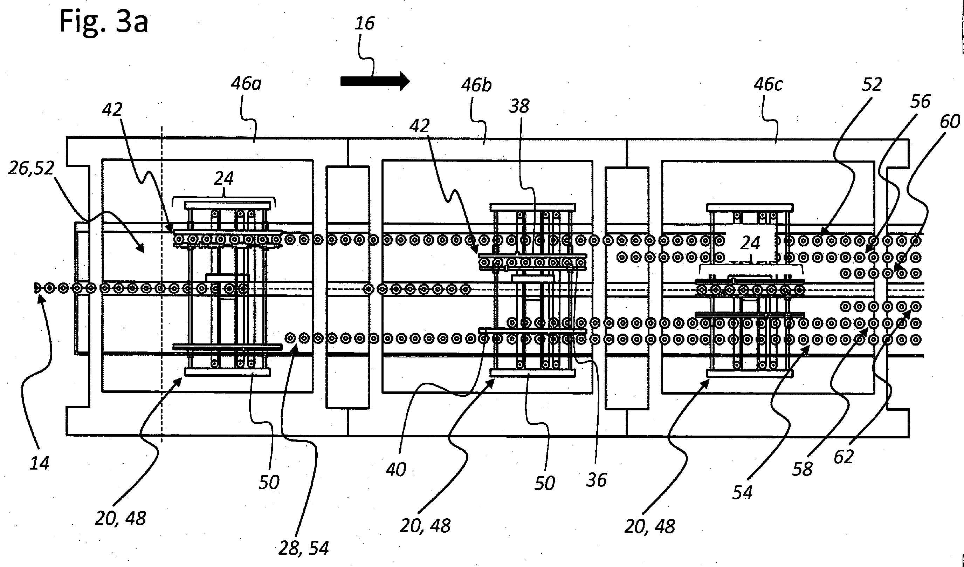

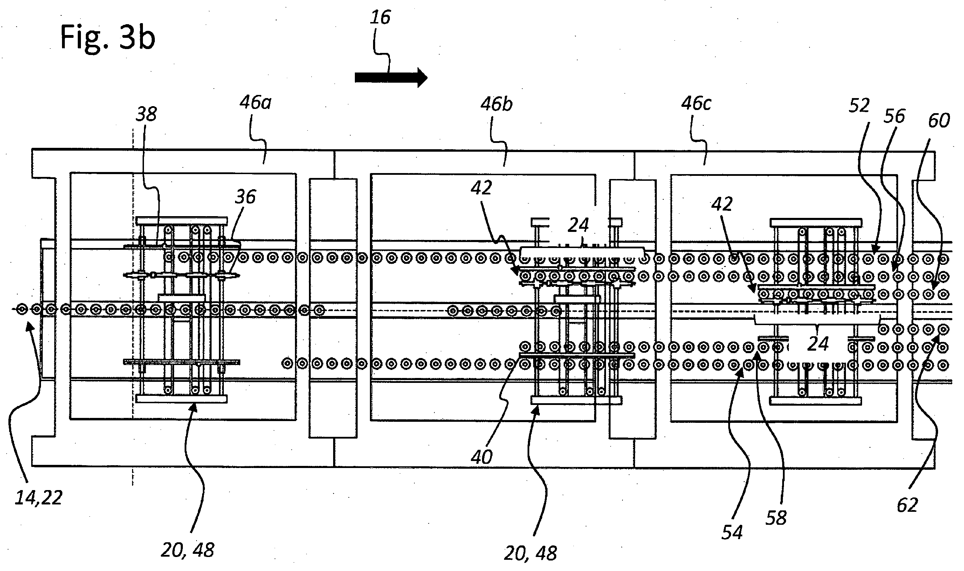

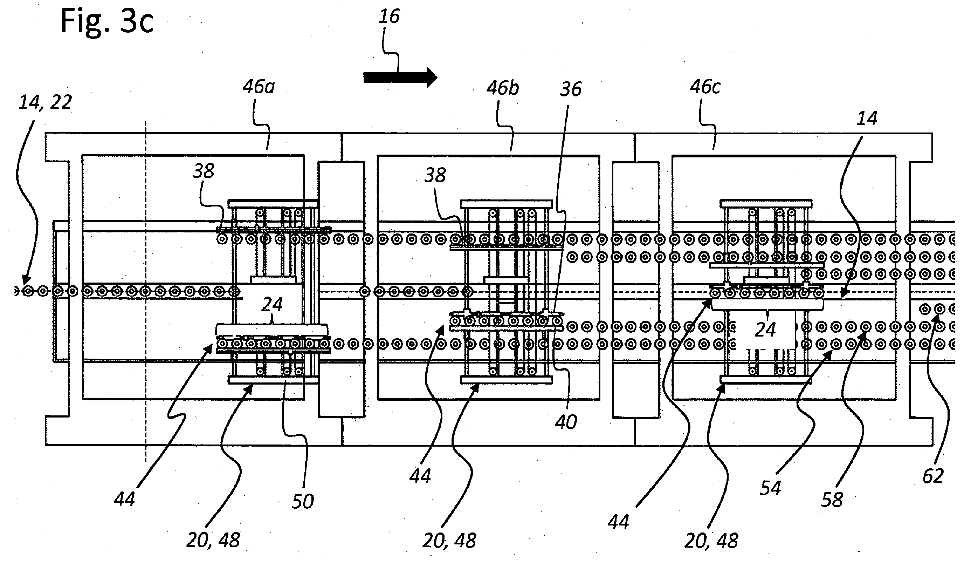

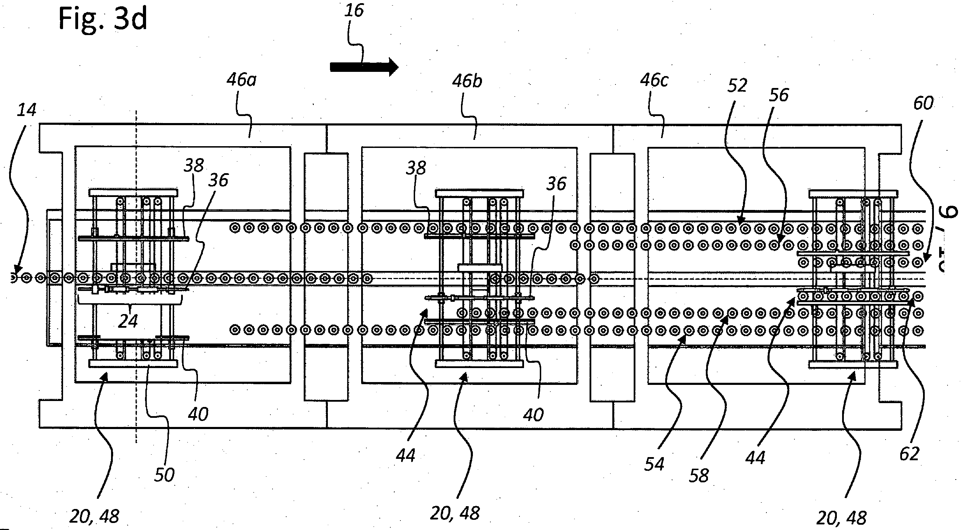

Wie es die Figuren 3a bis 3d verdeutlichen, können vorzugsweise in jeder von mehreren hintereinander angeordneten Gruppiereinheiten 46 die Artikelgruppen 24 in zwei parallele Gassen 26 und 28 aufgeteilt werden, so dass bei einer Anordnung mehrerer Gruppiereinheiten 46 in Förderrichtung 16 hintereinander die Artikelgruppen 24 von dem einen Zuförderband 14 in vier, sechs oder mehr parallele Gassen aufgeteilt und gruppiert werden können. So sind in den Darstellungen der Fig. 3 insgesamt drei Gruppiereinheiten 46 mit jeweils drei zusammenwirkenden Klemmleisten zur Aufteilung des Artikelstroms 22 und zu dessen Gruppierung in insgesamt sechs parallele Artikelströme in gestaffelter Anordnung hintereinander angeordnet.

Bei jeder dieser in Förderrichtung 16 hintereinander angeordneten Gruppiereinheiten 46 ist jeweils eine Gruppiereinrichtung 20 wie zuvor beschrieben vorgesehen, die jeweils drei zusammenwirkende Klemmleisten 36, 38 und 40 aufweist, welche an einer Aufhängung 48 mit einem in Förderrichtung 16 oder entgegen der Förderrichtung 16 oszillierend beweglichen Schlitten 50 beweglich gelagert sind, so dass sie am Schlitten 50 jeweils quer zur Förderrichtung 16 bewegt werden können, um abwechselnd das linke oder rechte Klemmleistenpaar 42 (vgl. Fig. 3a) bzw. 44 (vgl. Fig. 3c) zu bilden.

Nachfolgend werden die drei Gruppiereinheiten 46, die in den Darstellungen der Fig. 3 hintereinander in Förderrichtung 16 angeordnet sind, in die erste Gruppiereinheit 46a, die zweite Gruppiereinheit 46b und die dritte Gruppiereinheit 46c unterschieden, da die Gruppiereinrichtungen 20 mit ihren jeweiligen Klemmleisten 36, 38 und 40 in jeder dieser drei Gruppiereinheiten 46a, 46b, 46c jeweils unterschiedliche Positionen einnehmen und jeweils voneinander unabhängig bewegt werden.

Bei der schematischen Darstellung der Fig. 3a befindet sich das linke Klemmleistenpaar 42 der ersten Gruppiereinheit 46a am linken Rand seines Bewegungsanschlags, wodurch eine Artikelgruppe 24 in eine ganz links befindliche Fördergasse verschoben wurde. Da diese ganz links befindliche erste Fördergasse 52 sowie eine ganz rechts befindliche zweite Fördergasse 54 jeweils durch die erste Gruppiereinheit 46a besetzt werden, sorgt die Gruppiereinrichtung 20 der zweiten Gruppiereinheit 46b für die Besetzung einer dritten Fördergasse 56 (links) und einer vierten Fördergasse 58 (rechts), die sich jeweils rechter bzw. linker Hand von der ersten und zweiten Fördergassen 52 und 54 befinden. Die Gruppiereinrichtung 20 der zweiten Gruppiereinheit 46b hat in der in Fig. 3a gezeigten Bewegungsphase ein linkes Klemmleistenpaar 42 ausgebildet, das eine Artikelgruppe 24 nach links in Richtung der dritten Fördergasse 56 schiebt. Dagegen befindet sich das linke Klemmleistenpaar 42 der Gruppiereinrichtung 20 der dritten Gruppiereinheit 46c in der Vorbereitungsphase zur Verschiebung einer noch innerhalb der mittig angeordneten Zufördereinrichtung 14 befindlichen Artikelgruppe 24 nach links in eine unmittelbar neben der Zufördereinrichtung 14 befindliche fünfte Fördergasse 60. Die dritte Gruppiereinheit 46c sorgt für die abwechselnd erfolgende Verteilung von Artikelgruppen 24 in diese fünfte Fördergasse 60 sowie in eine unmittelbar rechts neben der Zufördereinrichtung 14 befindliche sechste Fördergasse 62.

Die Fig. 3b zeigt eine Rückbewegung der mittleren Klemmleiste 36 der ersten Gruppiereinheit 46a nach rechts, während die linke Klemmleiste 38 an ihrem linken Anschlag verbleibt, da sie für die weitere Verschiebebewegung einer Artikelgruppe 24 nach rechts nicht benötigt wird. Es sei allerdings darauf hingewiesen, dass in der gezeigten Bewegungsphase ein Rückhub der Klemmleiste 36 noch nicht möglich ist, da die abgestellten Gebinde noch im Weg sind. Der erwähnte Rückhub ist erst dann möglich, wenn der Schlitten 50 weit genug zurückgefahren ist bzw. wenn sich die Behälter in Förderrichtung weiter nach rechts bewegt haben. Das linke Klemmleistenpaar 42 der zweiten Gruppiereinheit 46b befindet sich gleichzeitig in ihrer Zielposition an der dritten Fördergasse 56, wo die entsprechende Artikelgruppe 24 abgesetzt wird. Das linke Klemmleistenpaar 42 der dritten Gruppiereinheit 46c befindet sich währenddessen in ihrer Zielposition an der fünften Fördergasse 60, wo die entsprechende Artikelgruppe 24 abgesetzt wird.

Die Fig. 3c zeigt eine Schiebebewegung des rechten Klemmleistenpaars 44 der ersten Gruppiereinheit 46a nach rechts, während die linke Klemmleiste 38 noch immer an ihrem linken Anschlag verbleibt, da sie in dieser Bewegungsphase nicht benötigt wird. Auch hier ist wiederum darauf hinzuweisen, dass in der gezeigten Bewegungsphase ein Rückhub der Klemmleiste 36 noch nicht möglich ist, da die abgestellten Gebinde noch im Weg sind. Der erwähnte Rückhub ist erst dann möglich, wenn der Schlitten 50 weit genug zurückgefahren ist bzw. wenn sich die Behälter in Förderrichtung weiter nach rechts bewegt haben. Der Schlitten 50 der Aufhängung 48 befindet sich währenddessen an seinem in Förderrichtung 16 vorderen Anschlag seines Bewegungsbereichs in der ersten Gruppiereinheit 46a, damit eine lückenlose Verschiebung der Artikelgruppe 24 in die zweite Fördergasse 54 gewährleistet werden kann. Das rechte Klemmleistenpaar 44 der zweiten Gruppiereinheit 46b befindet sich gleichzeitig in einer Verschiebebewegung nach rechts in Richtung der vierten Fördergasse 58, wo die entsprechende Artikelgruppe 24 abgesetzt werden soll (vgl. Fig. 3d). Das rechte Klemmleistenpaar 44 der dritten Gruppiereinheit 46c befindet sich währenddessen in ihrer Startposition an der mittigen Zufördereinrichtung 14, wo eine Artikelgruppe 24 aus dem Förderstrom 22 entnommen werden soll, um sie nach rechts in die sechste Fördergasse 62 zu verschieben, wo die entsprechende Artikelgruppe 24 abgesetzt wird (vgl. Fig. 3d).

Die Fig. 3d verdeutlicht eine Bewegungsphase, bei der sich die linke Klemmleiste 38 der ersten Gruppiereinheit 46a nach rechts in Richtung zur mittleren Klemmleiste 36 bewegt, um im Bereich der mittig verlaufenden Zufördereinrichtung 14 das linke Klemmleistenpaar 42 (vgl. Fig. 3a) zu bilden, da eine Verschiebebewegung nach links folgen soll. Gleichzeitig bleibt die rechte Klemmleiste 40 an ihrem rechten Anschlag, da sie in dieser und der unmittelbar folgenden Bewegungsphase nicht benötigt wird. Der Schlitten 50 der Aufhängung 48 befindet sich währenddessen an seinem in Förderrichtung 16 hinteren Anschlag seines Bewegungsbereichs in der ersten Gruppiereinheit 46a, damit eine frühzeitige Aufnahme einer Artikelgruppe 24 für deren lückenlose Verschiebung in die erste Fördergasse 52 gewährleistet werden kann.

Das rechte Klemmleistenpaar 44 der zweiten Gruppiereinheit 46b hat währenddessen seine Verschiebebewegung in die vierte Fördergasse 58 beendet, so dass die rechte Klemmleiste 40 an ihrer erreichten Position verbleiben kann, während die mittlere Klemmleiste 36 nach links in Richtung zur Zufördereinrichtung 14 verschoben wird, um dort gemeinsam mit der linken Klemmleiste 38 unter Ausbildung des linken Klemmleistenpaares 42 (vgl. Fig. 3a) eine Artikelgruppe 24 aufnehmen und nach links in die dritte Fördergasse 56 verschieben zu können.

Das rechte Klemmleistenpaar 44 der dritten Gruppiereinheit 46c befindet sich währenddessen in ihrer Zielposition an der sechsten Fördergasse 62, wo die entsprechende Artikelgruppe 24 abgesetzt wird (vgl. Fig. 3d).

Die schematische Darstellung der Fig. 4 zeigt eine Ausführungsvariante eines Schlittens 50, der Teil der Aufhängung 48 für drei Klemmleisten 36, 38 und 40 einer Gruppiereinrichtung 20 ist. Wie zuvor erwähnt, ist der Schlitten 50 der Aufhängung ausschließlich in x-Richtung beweglich, wobei diese x-Richtung parallel zur Förderrichtung 16 orientiert ist. Gleichzeitig sind die drei Klemmleisten 36, 38 und 40 am Schlitten 50 gelagert und gegenüber diesem ausschließlich senkrecht zur x-Richtung beweglich, was in Fig. 4 durch eine y-Richtung definiert ist. In einer einfachen Ausführungsvariante könnten den Klemmleisten 36, 38 und 40 jeweils einzelne Stellantriebe zugeordnet sein, die jeweils auf dem Schlitten 50 fixiert sein könnten. Dies hätte allerdings den bedeutenden Nachteil, dass der Schlitten 50 einerseits relativ schwer geraten würde, was zu einer Erhöhung des Massenträgheitsmoments führen würde. Da der Schlitten 50 sehr schnell in x-Richtung oszillieren soll, wäre eine Gewichtserhöhung von erheblichem Nachteil. Hinzu käme die unverzichtbaren Steuer- und Energieversorgungsleitungen, die von einem Gestell der jeweiligen Gruppiereinheit 46 zum beweglichen Schlitten 50 geführt werden müssten.

Um den erwähnten Nachteil zu vermeiden und einen möglichst gewichtsreduzierten Schlitten 50 zur Verfügung zu stellen, der mit relativ geringen Antriebsleistungen sehr schnell und exakt in x-Richtung bewegt werden kann, ohne dass es hierbei zu starken Relativbewegungen eines Rahmengestells der Gruppiereinheit 46 und/oder der Aufhängung 48 kommt, ist jeder einzelnen Klemmleiste 36, 38 und 40 jeweils ein gestellfester Antriebsmotor 64, 66 bzw. 68 zugeordnet, die jeweils völlig vom beweglichen Schlitten 50 entkoppelt sind und so dessen Gewicht nicht beeinflussen. Um die Querbeweglichkeit der drei Klemmleisten 36, 38 und 40 sicherzustellen, ist jeder der Antriebsmotoren 64, 66 und 68 über jeweils ein Endlos-Zugmittel 70, 72 bzw. 74 mit einer der Klemmleisten 36, 38 und 40 gekoppelt, während an einer gegenüber liegenden Seite des Schlittens 50 gestellfeste Umlenkungsrollen 76, 78 bzw. 80 dafür sorgen, dass die Endlos-Zugmittel 70, 72 und 74 eine konstante Länge aufweisen, unabhängig von x-Bewegungen des Schlittens 50 sowie von y-Bewegungen der darauf verschiebbar gelagerten Klemmleisten 36, 38 und 40. Die Endlos-Zugmittel 70, 72 und 74 können vorzugsweise durch Riemen aus Kunststoff o. dgl. gebildet sein, die eine möglichst geringe Längsdehnung unter Belastung aufweisen, so dass sie unter allen auftretenden Betriebsbedingungen weitgehend konstant gespannt bleiben können.

Jedes der Endlos-Zugmittel 70, 72 und 74 weist eine mehrfache Umlenkung am Schlitten 50 auf, die gemeinsam dafür sorgen, dass sich bei allen Schlitten- und Klemmleistenbewegungen die Gesamtlänge des jeweiligen Zugmittels 70, 72 bzw. 74 nicht ändert. Jedes Zugtrum eines Endlos-Zugmittels 70, 72 bzw. 74 weist zwei Umlenkrollen am Schlitten 50 auf, die zu beiden Seiten der jeweiligen Klemmleiste 36, 38 bzw. 40 schlittenfest montiert sind. Zudem weist auch jedes Zugtrum eines Endlos-Zugmittels 70, 72 bzw. 74 zwei weitere Umlenkrollen am Schlitten 50 auf, die ebenfalls zu beiden Seiten der jeweiligen Klemmleiste 36, 38 bzw. 40 schlittenfest montiert sind. Auf diese Weise sind die Antriebsmotoren 64, 66 und 68 völlig vom Schlitten 50 entkoppelt, während gleichzeitig eine sehr präzise Querverschiebung der Klemmleisten 36, 38 und 40 mit Hilfe der mehrfach umgelenkten Endlos-Zugmittel 70, 72 und 74 ermöglicht ist, ohne dass diese Querbewegungen in y-Richtung durch die Oszillation des Schlittens 50 in x-Richtung beeinflusst werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Vorrichtung, Gruppiervorrichtung
- 12: Artikel, Behälter, Gebinde, Stückgüter
- 14: Zufördereinrichtung
- 16: Transportrichtung, Förderrichtung
- 18: geschlossene Reihe; regelmäßige Reihe
- 20: Gruppiereinrichtung
- 22: Förderstrom
- 24: Artikelgruppe
- 26: linke Fördergasse
- 28: rechte Fördergasse
- 30: Handhabungs- und/oder Verpackungseinrichtung
- 32: Abförderrichtung
- 34: Verschieberichtung
- 36: mittlere Klemmleiste
- 38: linke Klemmleiste
- 40: rechte Klemmleiste
- 42: erstes Klemmleistenpaar, linkes Klemmleistenpaar
- 44: zweites Klemmleistenpaar, rechtes Klemmleistenpaar
- 46: Gruppiereinheit
- 48: Aufhängung
- 50: Schlitten
- 52: erste Fördergasse
- 54: zweite Fördergasse
- 56: dritte Fördergasse
- 58: vierte Fördergasse
- 60: fünfte Fördergasse
- 62: sechste Fördergasse
- 64: erster Antriebsmotor
- 66: zweiter Antriebsmotor
- 68: dritter Antriebsmotor
- 70: erstes Endlos-Zugmittel
- 72: zweites Endlos-Zugmittel
- 74: drittes Endlos-Zugmittel
- 76: erste Umlenkrolle
- 78: zweite Umlenkrolle
- 80: dritte Umlenkrolle

- x: Verschieberichtung des Schlittens in x-Richtung
- y: Verschieberichtung der Klemmleisten in y-Richtung

## Patentansprüche

1. Verfahren zum Gruppieren von Artikeln (12), die in wenigstens einer regelmäßigen Reihe (18) hintereinander in horizontaler Richtung (16) befördert werden, **dadurch gekennzeichnet, dass** die Artikel (12) mittels wenigstens dreier, jeweils in wechselnden Paaren zusammenwirkender Klemmleisten (36, 38, 40), von denen gleichzeitig zwei in paarweiser Zusammenwirkung an beiden Längsseiten der regelmäßigen Reihe (18) der Artikel (12) angreifen, aufgeteilt und seitlich in Fördergassen (26, 28, 52, 54, 56, 58, 60, 62) verschoben werden, wobei eine mittlere Klemmleiste (36) bei jedem Verschiebevorgang einer Artikelgruppe (24) jeweils mit einer der äußeren Klemmleisten (38, 40) zusammenwirkt und mit dieser ein Klemmleistenpaar (42, 44) zur temporären seitlichen Fixierung der kontaktierten Artikelgruppe (24) und zu deren seitlicher Verschiebung nach links oder rechts in die jeweilige Fördergasse (26, 28, 52, 54, 56, 58, 60, 62) bildet.

2. Verfahren nach Anspruch 1, bei dem aufeinander folgende Artikelgruppen (24) aus der regelmäßigen Reihe (18) in Förderrichtung (16) jeweils abwechselnd seitlich nach links oder rechts verschoben werden.

3. Verfahren nach Anspruch 1 oder 2, bei dem die mittlere Klemmleiste (36) bei Zusammenwirkung mit der äußeren linken Klemmleiste (38) in Förderrichtung (16) von rechts an der zu verschiebenden Artikelgruppe (24) angreift, und wobei die mittlere Klemmleiste (36) bei Zusammenwirkung mit der äußeren rechten Klemmleiste (40) in Förderrichtung (16) von links an der zu verschiebenden Artikelgruppe (24) angreift.

4. Verfahren nach einem der Ansprüche 1 bis 3, bei dem sich die Klemmleisten (36, 38, 40) jeweils innerhalb des Gruppierbereichs in einer horizontalen Ebene bewegen.

5. Verfahren nach einem der Ansprüche 1 bis 4, bei dem die Klemmleisten (36, 38, 40) die Artikelgruppen (24) von einer zugeführten regelmäßigen Reihe (18) in definierter Weise auf wenigstens zwei parallele Fördergassen (26, 28, 52, 54, 56, 58, 60, 62) aufteilen, die zu beiden Seiten der Reihe (18) angeordnet sind.

6. Verfahren nach Anspruch 5, bei dem das Gruppieren und Aufteilen einer Reihe (18) von hintereinander in Förderrichtung (16) beförderter Artikel (12) mehrfach in hintereinander gestaffelter Anordnung mittels mehrerer hintereinander angeordneter Gruppiereinheiten (46) zur Verteilung der Artikel (12) auf zwei, vier, sechs oder mehr

7. Vorrichtung zum Gruppieren von Artikeln (12), mit einer Zufördereinrichtung (14) zum horizontalen Transport (16) wenigstens einer Reihe (18) regelmäßig hintereinander beförderter Artikel (12) zu einer Gruppiereinrichtung (20), **dadurch gekennzeichnet, dass** die Gruppiereinrichtung (20) wenigstens drei, jeweils in wechselnden Paaren (42, 44) zusammenwirkende Klemmleisten (36, 38, 40) zur seitlichen Kontaktierung der regelmäßigen Reihe (18) von Artikeln (12) umfasst, wobei einzelne Artikelgruppen (24) der regelmäßigen Reihe (18) seitlich zu wenigstens einer weiteren Fördergasse (26, 28, 52, 54, 56, 58, 60, 62) verschiebbar sind, und wobei eine mittlere Klemmleiste (36) bei jedem Verschiebevorgang einer Artikelgruppe (24) jeweils mit einer der äußeren Klemmleisten (38, 40) zusammenwirkt und mit dieser ein Klemmleistenpaar (42, 44) zur seitlichen Fixierung der kontaktierten Artikelgruppe (24) und zu deren seitlicher Verschiebung nach links oder rechts bildet.

8. Vorrichtung nach Anspruch 7, bei der aufeinander folgende Artikelgruppen (24) aus der Reihe (18) in Förderrichtung (16) jeweils abwechselnd gegenüber einer durch die Zufördereinrichtung (14) definierten Förderrichtung (16) nach links oder rechts verschiebbar sind, und wobei die mittlere Klemmleiste (36) bei Zusammenwirkung mit einer äußeren linken Klemmleiste (38) von rechts an der zu verschiebenden Artikelgruppe (24) angreift, und wobei die mittlere Klemmleiste (36) bei Zusammenwirkung mit einer äußeren rechten Klemmleiste (40) von links an der zu verschiebenden Artikelgruppe (24) angreift.

9. Vorrichtung nach Anspruch 7 oder 8, bei der sich die wenigstens drei Klemmleisten (36, 38, 40) jeweils innerhalb der Gruppiereinheit (46) annähernd in einer horizontalen Ebene bewegen.

10. Vorrichtung nach einem der Ansprüche 7 bis 9, bei der die wenigstens drei Klemmleisten (36, 38, 40) der Gruppiereinrichtung (20) an einer gemeinsamen Aufhängung (48) oberhalb einer durch die Zufördereinrichtung (14) definierten Transportebene geführt sind.

11. Vorrichtung nach Anspruch 10, bei der die Aufhängung (48) einen parallel zur Förderrichtung (16) der Zufördereinrichtung (14) oszillierenden Schlitten (50) umfasst, an dem die wenigstens drei Klemmleisten (36, 38, 40) quer zur Oszillationsrichtung des Schlittens (50) beweglich gelagert sind.

12. Vorrichtung nach einem der Ansprüche 7 bis 11, bei der die Gruppiereinheit (46) die Artikelgruppen (24) von einer zugeführten regelmäßigen Reihe (18) der Zufördereinrichtung (14) in definierter Weise auf wenigstens zwei parallele Gassen (26, 28, 52, 54, 56, 58, 60, 62) aufteilen und/oder gruppieren.

13. Vorrichtung nach einem der Ansprüche 7 bis 12, bei der mehrere Gruppiereinheiten (46) in Förderrichtung (16) hintereinander angeordnet sind zur Aufteilung und/oder Gruppierung der Artikel (12) auf vier, sechs oder mehr paralleler Gassen (26, 28, 52, 54, 56, 58, 60, 62) erfolgt, wobei eine gerade Anzahl von abführenden Fördergassen (26, 28, 52, 54, 56, 58, 60, 62) vorgesehen ist.

14. Vorrichtung nach Anspruch 13, bei der mehrere Gruppiereinheiten (46) mit jeweils drei zusammenwirkenden Klemmleisten (36, 38, 40) zur Aufteilung wenigstens eines Artikelstroms (22) und/oder zu dessen Gruppierung in jeweils zwei oder mehr parallele Artikelströme (22) in gestaffelter Anordnung hintereinander angeordnet sind.

## Claims

1. A method for grouping articles (12), which are being conveyed one after the other in at least one regular row (18) in a horizontal direction (16), the method being **characterised in that** the articles (12) are divided up and shifted laterally into conveyor lanes (26, 28, 52, 54, 56, 58, 60, 62) by means of at least three clamping strips (36, 38, 40), in each case interacting in alternating pairs, of which two clamping strips (36, 38, 40) in a pairwise interaction simultaneously engage at both longitudinal sides of the regular row (18) of articles (12), wherein in each case a middle clamping strip (36) interacts in every shifting process of an article group (24) with one of the outer clamping strips (38, 40) and together with it forms a pair of clamping strips (42, 44) for the temporary lateral fixation of the contacted article group (24) and for shifting it laterally to the left or to the right side into the respective conveyor lane (26, 28, 52, 54, 56, 58, 60, 62).

2. The method as recited in claim 1, in which consecutive article groups (24) are shifted laterally from the regular row (18) in conveying direction (16) in each case alternatingly to the left or to the right side.

3. The method as recited in claim 1 or 2 wherein the middle clamping strip (36), when interacting with the outer left clamping strip (38), engages from the right side in conveying direction (16) with the article group (24) to be shifted, and wherein the middle clamping strip (36), when interacting with the outer right clamping strip (40), engages from the left side in conveying direction (16) with the article group (24) to be shifted.

4. The method as recited in one of the claims 1 to 3, in which the clamping strips (36, 38, 40) each move in a horizontal plane within the grouping section.

5. The method as recited in one of the claims 1 to 4, in which the clamping strips (36, 38, 40) divide up the article groups (24) from a supplied regular row (18) in a specified manner into at least two parallel conveyor lanes (26, 28, 52, 54, 56, 58, 60, 62), which are arranged on both sides of the row (18).

6. The method as recited in claim 5, in which the grouping and the dividing up of a row (18) of articles (12) being conveyed one after the other in conveying direction (16) is carried out multiply in a consecutively staggered arrangement by means of a number of grouping units (46) arranged one after the other for distributing the articles (12) into two, four, six or more parallel conveyor lanes (26, 28, 52, 54, 56, 58, 60, 62), wherein an even number of discharge conveyor lanes (26, 28, 52, 54, 56, 58, 60, 62) is provided.

7. A device for grouping articles (12), with a feeding apparatus (14) for horizontally transporting (16) at least one row (18) of articles (12) to a grouping apparatus (20), the articles (12) being regularly conveyed one after the other, **characterised in that** the grouping apparatus (20) comprises at least three clamping strips (36, 38, 40), in each case interacting in alternating pairs (42, 44), for laterally contacting the regular row (18) of articles (12), wherein individual article groups (24) of the regular row (18) are laterally shiftable to at least one further conveyor lane (26, 28, 52, 54, 56, 58, 60, 62), and wherein in each case a middle clamping strip (36) interacts in every shifting process of an article group (24) with one of the outer clamping strips (38, 40) and together with it forms a pair of clamping strips (42, 44) for the lateral fixation of the contacted article group (24) and for shifting it laterally to the left or to the right side.

8. The device as recited in claim 7 wherein consecutive article groups (24) from the row (18) are in each case alternatingly shiftable in conveying direction (16) to the left or to the right side in relation to a conveying direction (16) defined by the feeding apparatus (14), and wherein the middle clamping strip (36), when interacting with the outer left clamping strip (38), engages from the right side with the article group (24) to be shifted, and wherein the middle clamping strip (36), when interacting with the outer right clamping strip (40), engages from the left side with the article group (24) to be shifted.

9. The device as recited in claim 7 or 8, in which the at least three clamping strips (36, 38, 40) each move in an approximately horizontal plane within the grouping unit (46).

10. The device as recited in one of the claims 7 to 9, in which the at least three clamping strips (36, 38, 40) of the grouping apparatus (20) are conducted together in a common suspension (48) above a plane of transport defined by the feeding apparatus (14).

11. The device as recited in claim 10, in which the suspension (48) comprises a carriage (50) oscillating parallelly to the conveying direction (16) of the feeding apparatus (14), at which carriage (50) the at least three clamping strips (36, 38, 40) are mounted to be movable transversely to the direction of oscillation of the carriage (50).

12. The device as recited in one of the claims 7 to 11, in which the grouping unit (46) divides up and/or groups the article groups (24) from a fed, regular row (18) of the feeding apparatus (14) in a specified manner into at least two parallel lanes (26, 28, 52, 54, 56, 58, 60, 62).

13. The device as recited in one of the claims 7 to 12, in which a plurality of grouping units (46) are arranged one after the other in conveying direction (16) for dividing up and/or grouping the articles (12) into four, six or more parallel lanes (26, 28, 52, 54, 56, 58, 60, 62), wherein an even number of discharge conveyor lanes (26, 28, 52, 54, 56, 58, 60, 62) is provided.

14. The device as recited in claim 13, in which a plurality of grouping units (46) are arranged one after the other in a staggered arrangement with in each case three interacting clamping strips (36, 38, 40) for the purpose of dividing up and/or grouping at least one article stream (22) into in each case two or more parallel article streams (22).

## Revendications

1. Procédé de groupement d'articles (12) qui sont transportés en au moins une rangée régulière (18) les uns derrière les autres dans la direction horizontale (16), **caractérisé par le fait que** les articles (12) sont répartis et déplacés latéralement dans des voies de transport (26, 28, 52, 54, 56, 58, 60, 62) par l'intermédiaire d'au moins trois barres de serrage (36, 38, 40) qui agissent de concert les unes avec les autres respectivement en paires alternées et dont deux s'engagent en même temps, en coopération par paires, sur les deux grands côtés de la rangée régulière (18) des articles (12), dans lequel, lors de chaque opération de déplacement d'un groupe d'articles (24), une barre de serrage (36) de milieu agit de concert respectivement avec l'une des barres de serrage (38, 40) extérieures et forme avec celle-ci une paire de barres de serrage (42, 44) pour la fixation latérale temporaire du groupe d'articles (24) contacté et pour déplacer celui-ci latéralement à gauche ou à droite dans la voie de transport (26, 28, 52, 54, 56, 58, 60, 62) respectif.

2. Procédé selon la revendication 1, dans lequel des groupes d'articles (24) se succédant sont déplacés depuis la rangée régulière (18), dans la direction de transport (16), respectivement à tour de rôle latéralement à gauche ou à droite.

3. Procédé selon la revendication 1 ou 2, dans lequel la barre de serrage (36) de milieu, lorsqu'elle agit de concert avec la barre de serrage (38) extérieure gauche, s'engage, dans la direction de transport (16), de droite sur le groupe d'articles (24) à déplacer, et dans lequel la barre de serrage (36) de milieu, lorsqu'elle agit de concert avec la barre de serrage (40) extérieure droite, s'engage, dans la direction de transport (16), de gauche sur le groupe d'articles (24) à déplacer.

4. Procédé selon l'une quelconque des revendications 1 à 3, dans lequel les barres de serrage (36, 38, 40) se déplacent chacune à l'intérieur de la zone de groupement dans un plan horizontal.

5. Procédé selon l'une quelconque des revendications 1 à 4, dans lequel les barres de serrage (36, 38, 40) répartissent d'une manière définie les groupes d'articles (24) d'une rangée régulière (18) amenée, dans au moins deux voies de transport (26, 28, 52, 54, 56, 58, 60, 62) parallèles qui sont disposées de part et d'autre de ladite rangée (18).

6. Procédé selon la revendication 5, dans lequel le groupement et la répartition d'une rangée (18) d'articles (12) transportés les uns derrière les autres dans la direction de transport (16) se fait à plusieurs reprises dans un arrangement échelonné à la file, au moyen d'une pluralité d'unités de groupement (46) disposées les unes derrière les autres et destinées à répartir les articles (12) dans deux, quatre, six voies de transport (26, 28, 52, 54, 56, 58, 60, 62) parallèles, ou plus, un nombre pair de voies de transport (26, 28, 52, 54, 56, 58, 60, 62) d'évacuation étant prévu.

7. Dispositif de groupement d'articles (12), comprenant un dispositif d'alimentation (14) pour le transport horizontal (16) d'au moins une rangée (18) d'articles (12) transportés régulièrement les uns derrière les autres, vers un dispositif de groupement (20), **caractérisé par le fait que** ledit dispositif de groupement (20) comprend au moins trois barres de serrage (36, 38, 40) qui agissent de concert les unes avec les autres respectivement en paires alternées (42, 44) et sont destinées à entrer en contact latéral avec ladite rangée régulière (18) d'articles (12), dans lequel des groupes d'articles (24) particuliers de la rangée régulière (18) sont déplaçables latéralement vers au moins une autre voie de transport (26, 28, 52, 54, 56, 58, 60, 62), et dans lequel, lors de chaque opération de déplacement d'un groupe d'articles (24), une barre de serrage (36) de milieu agit de concert respectivement avec l'une des barres de serrage (38, 40) extérieures et forme avec celle-ci une paire de barres de serrage (42, 44) pour la fixation latérale du groupe d'articles (24) contacté et pour déplacer celui-ci latéralement à gauche ou à droite.

8. Dispositif selon la revendication 7, dans lequel des groupes d'articles (24) se succédant peuvent être déplacés depuis la rangée (18), dans la direction de transport (16), respectivement à tour de rôle à gauche ou à droite par rapport à une direction de transport (16) définie par ledit dispositif d'alimentation (14), et dans lequel la barre de serrage (36) de milieu, lorsqu'elle agit de concert avec une barre de serrage (38) extérieure gauche, s'engage de droite sur le groupe d'articles (24) à déplacer, et dans lequel la barre de serrage (36) de milieu, lorsqu'elle agit de concert avec une barre de serrage (40) extérieure droite, s'engage de gauche sur le groupe d'articles (24) à déplacer.

9. Dispositif selon la revendication 7 ou 8, dans lequel lesdites au moins trois barres de serrage (36, 38, 40) se déplacent chacune, à l'intérieur de ladite unité de groupement (46), approximativement dans un plan horizontal.

10. Dispositif selon l'une quelconque des revendications 7 à 9, dans lequel lesdites au moins trois barres de serrage (36, 38, 40) du dispositif de groupement (20) sont guidées sur une suspension (48) commune au-dessus d'un plan de transport défini par ledit dispositif d'alimentation (14).

11. Dispositif selon la revendication 10, dans lequel la suspension (48) comprend un chariot (50) qui oscille parallèlement à la direction de transport (16) du dispositif d'alimentation (14) et sur lequel lesdites au moins trois barres de serrage (36, 38, 40) sont logées de manière mobile transversalement à la direction d'oscillation du chariot (50).

12. Dispositif selon l'une quelconque des revendications 7 à 11, dans lequel ladite unité de groupement (46) répartit et/ou groupe d'une manière définie les groupes d'articles (24) d'une rangée régulière (18) amenée du dispositif d'alimentation (14), dans au moins deux voies de transport (26, 28, 52, 54, 56, 58, 60, 62) parallèles.

13. Dispositif selon l'une quelconque des revendications 7 à 12, dans lequel une pluralité d'unités de groupement (46) sont disposées les unes derrière les autres dans la direction de transport (16) pour répartir et/ou grouper les articles (12) dans quatre, six voies (26, 28, 52, 54, 56, 58, 60, 62) parallèles, ou plus, un nombre pair de voies de transport (26, 28, 52, 54, 56, 58, 60, 62) d'évacuation étant prévu.

14. Dispositif selon la revendication 13, dans lequel plusieurs unités de groupement (46) comprenant chacune trois barres de serrage (36, 38, 40) agissant de concert les unes avec les autres et destinées à répartir au moins un flux d'articles (22) et/ou à grouper celui-ci en respectivement deux flux d'articles (22) parallèles, ou plus, sont disposées les unes derrière les autres en arrangement échelonné.
